# EUROPÄISCHE PATENTSCHRIFT

(11) **EP 3 588 299 B1**
(45) Veröffentlichungstag und Bekanntmachung des Hinweises auf die Patenterteilung: **14.04.2021**
(21) Anmeldenummer: 19178778.7
(22) Anmeldetag: 06.06.2019
(51) Int. Cl.: G06F 11/00, G06F 11/07, G06F 11/22, G06F 11/30

(54) **VERFAHREN ZUR FEHLERBEHANDLUNG BEI BUSKOMMUNIKATION UND BUSKOMMUNIKATIONSSYSTEM**
METHOD FOR HANDLING ERRORS IN BUS COMMUNICATION AND BUS COMMUNICATIONS SYSTEM
PROCÉDÉ DE DÉPANNAGE D'UNE COMMUNICATION PAR BUS ET SYSTÈME DE COMMUNICATION PAR BUS

(30) Priorität: 22.06.2018 DE 102018115100
(43) Veröffentlichungstag der Anmeldung: 01.01.2020
(73) Patentinhaber: Krohne Messtechnik GmbH, 47058 Duisburg (DE)
(72) Erfinder: Krämer, Julian, 45479 Mülheim (DE)
(74) Vertreter: Gesthuysen Patentanwälte

(56) Entgegenhaltungen:
- EP-A2- 0 837 394
- WO-A1-2007/059823
- WO-A2-03/027685
- US-A1- 2004 054 829

## Beschreibung

Die Erfindung betrifft ein Verfahren zur Fehlerbehandlung bei Buskommunikation gemäß einem Busprotokoll zwischen einem ersten Busteilnehmer und einem zweiten Busteilnehmer. Das Busprotokoll bei diesem Verfahren definiert mindestens einen Busfehlercode für einen Fehler und Busnachrichten mit einem Busdatenbereich. Wenn von dem ersten Busteilnehmer der Fehler erkannt wird, dann wird das Folgende ausgeführt. Vom ersten Busteilnehmer wird eine erste Busnachricht erzeugt und der Busfehlercode in den Busdatenbereich der ersten Busnachricht geschrieben. Die erste Busnachricht wird vom ersten Busteilnehmer zum zweiten Busteilnehmer übermittelt. Vom zweiten Busteilnehmer wird durch Auswertung des Busfehlercodes der Fehler identifiziert

Aus der US 2004/0054829 A1 ist ein Verfahren zur Fehlerbehebung bei Buskommunikation gemäß einem Busprotokoll zwischen einem ersten und einem zweiten Busteilnehmer bekannt. Das Busprotokoll verwendet mindestens einen Busfehlercode für einen Fehler und Busnachrichten mit einem Busdatenbereich, wenn von einem Busteilnehmer ein Fehler erkannt wird.

Die Erfindung betrifft zum anderen auch ein Buskommunikationssystem mit einem ersten Busteilnehmer, einem zweiten Busteilnehmer und einem Bus. Der erste Busteilnehmer und der zweite Busteilnehmer sind zur Buskommunikation untereinander über den Bus gemäß einem Busprotokoll ausgebildet. Das Busprotokoll definiert wie beim Verfahren mindestens einen Busfehlercode für einen Fehler und Busnachrichten mit einem Busdatenbereich. Der erste Busteilnehmer ist ausgebildet, den Fehler zu erkennen, und ist ausgebildet ausgelöst durch das Erkennen des Fehlers, eine erste Busnachricht zu erzeugen und den Busfehlercode in den Busdatenbereich der ersten Busnachricht zu schreiben. Der zweite Busteilnehmer ist ausgebildet, durch Auswertung des Busfehlercodes den Fehler zu identifizieren.

Buskommunikationssysteme mit Busteilnehmern werden zum Beispiel in der Prozessautomation verwendet. Die Prozessautomation ist mit der Automatisierung von industriellen Prozessen, wie zum Beispiel Herstellungsprozessen, befasst. Industrielle Prozesse werden durch Aktoren beeinflusst und durch Sensoren überwacht. Aktoren sind zum Beispiel Stellglieder und Ventile und Sensoren sind zum Beispiel Durchfluss-, Füllstands-, Temperatur-, Druck-, Analyse-, Gas- oder Dampfmessegeräte. Durchflussmessgeräte sind zum Beispiel magnetisch-induktive Durchflussmessgeräte zur Messung des Durchflusses eines Mediums durch ein Messrohr. Die Steuerung von industriellen Prozessen erfolgt durch Steuerungs- und/oder Leitsysteme mittels der Aktoren und Sensoren. Erst durch die zentrale Steuerbarkeit von Aktoren und Sensoren durch Steuerungs- und/oder Leitsysteme ist eine Prozessautomation sinnvoll möglich.

Zur Steuerung ist Kommunikation zwischen den Sensoren und Aktoren einerseits und den Steuerungs- und/oder Leitsystemen andererseits erforderlich. Oftmals ist Kommunikation auch zwischen Sensoren und Aktoren untereinander erforderlich. Deshalb sind die Sensoren, Aktoren und Steuerungs- und/oder Leitsysteme einer industriellen Anlage zumeist als Busteilnehmer ausgebildet, die über einen Bus untereinander kommunizieren und auf diese Weise ein Buskommunikationssystem bilden. Ein Bus benötigt ein Übertragungsmedium, welches vorzugsweise leitungsgebunden ist, also elektrische Leiter aufweist. Kommunikation ist die Übermittlung von Daten, also Informationen. Bei diesen Daten kann es sich um Nutzdaten, wie zum Beispiel Messwerte und Parameterwerte, oder um Anweisungen, wie zum Beispiel die Anweisung, eine Messung zur Bestimmung eines Messwerts durchzuführen, einen Parameterwert zum Kalibrieren eines Messgeräts zu setzen oder eine Busnachricht zu übermitteln, handeln. Vorzugsweise sind die Sensoren und Aktoren auch als Feldgeräte ausgebildet. Busteilnehmer weisen eine Busschnittstelle zum Anschluss an und zur Kommunikation über den Bus auf.

Buskommunikation zwischen Busteilnehmern erfolgt gemäß einem Busprotokoll. Das Busprotokoll definiert Busnachrichten mit einem Busdatenbereich. In dem Busdatenbereich werden beliebige Daten zwischen Busteilnehmern übermittelt. Die Daten im Busdatenbereich sind zum Beispiel Nutzdaten oder Anweisungen. Zum Beispiel schreibt der erste Busteilnehmer Daten in den Busdatenbereich einer Busnachricht, wird die Busnachricht dann vom ersten Busteilnehmer zum zweiten Busteilnehmer übermittelt, liest der zweite Busteilnehmer die Daten aus dem Busdatenbereich aus und verarbeitet diese. Das Schreiben, Übertragen und Lesen von Busnachrichten ist in dem Busprotokoll definiert. Die Verarbeitung der ausgelesenen Daten ist zum Beispiel der Ausgestaltung des Busteilnehmers überlassen.

Da bei der Übermittlung von Busnachrichten und auch bei der Verarbeitung von Busnachrichten Fehler auftreten, ist eine Fehlerbehandlung erforderlich, wozu insbesondere auch die Identifikation von Fehlern gehört. Dazu definiert das Busprotokoll mindestens einen Busfehlercode. Gemäß dieser Definition werden Fehlern Busfehlercodes zugeordnet. Wenn ein Busteilnehmer einen Fehler erkennt, dann schreibt dieser Busteilnehmer den diesem Fehler zugeordneten Fehlercode in den Busdatenbereich einer Busnachricht. Der Busteilnehmer ist ausgebildet, Fehler zu erkennen und den zu dem erkannten Fehler gehörenden Busfehlercode in den Busdatenbereich einer Busnachricht zu schreiben. Nach der Übermittlung einer solchen Busnachricht an einen anderen Busteilnehmer identifiziert dieser andere Busteilnehmer durch Auswertung des Busfehlercodes in dem Busdatenbereich der Busnachricht den Fehler. Ein Fehler ist eine ungewollte Abweichung und tritt zum Beispiel bei einer Übermittlung einer Busnachricht über den Bus in der Busnachricht oder bei der Verarbeitung einer Busnachricht in einem Busteilnehmer auf.

Aus dem Stand der Technik bekannte Busprotokolle jedoch ordnen verschiedenen Fehlern denselben Busfehlercode und/oder nicht allen Fehlern überhaupt einen Busfehlercode zu. Wenn verschiedenen Fehlern derselbe Busfehlercode zugeordnet wird, dann ist die Identifikation des Fehlers mittels des Busfehlercodes nicht eindeutig also ungenau. Wenn einem Fehler kein Busfehlercode zugeordnet ist, dann kann dieser Fehler auch nicht mittels eines Busfehlercodes identifiziert werden. Folglich ist der von dem Busteilnehmer erkannte Fehler nicht eindeutig oder gar nicht vom anderen Busteilnehmer durch Auswertung des Busfehlercodes identifizierbar, wodurch die Fehlerbehandlung beeinträchtigt ist. Ergänzungen des Busprotokolls um weitere Busfehlercodes sind oftmals nicht möglich, um die Kompatibilität des Busprotokolls nicht zu beeinträchtigen.

Aufgabe der vorliegenden Erfindung ist daher die Angabe eines Verfahrens zur Fehlerbehandlung bei Buskommunikation und eines Buskommunikationssystems, bei welchem die Fehlerbehandlung im Vergleich zum Stand der Technik verbessert ist und welches kompatibel mit dem Busprotokoll ist. Eine Verbesserung ist insbesondere dann gegeben, wenn die Identifikation von Fehlern verbessert ist. Die Identifikation von Fehlern ist zum Beispiel dann verbessert, wenn weitere Fehler identifizierbar sind und/oder Fehler genauer identifizierbar sind.

Die Aufgabe ist bei einem Verfahren der beschriebenen Art durch die Lehre gemäß Patentanspruch 1 gelöst. Gemäß der Lehre werden die folgenden Verfahrensschritte ausgeführt, wenn von dem ersten Busteilnehmer der eingangs genannte Fehler erkannt wird:
In einem ersten Verfahrensschritt wird vom ersten Busteilnehmer eine den Busfehlercode ergänzende Fehleridentifikation des Fehlers im ersten Busteilnehmer abgespeichert, eine erste Busnachricht erzeugt und der Busfehlercode in den Busdatenbereich der ersten Busnachricht geschrieben.

In einem zweiten Verfahrensschritt wird die erste Busnachricht vom ersten Busteilnehmer zum zweiten Busteilnehmer übermittelt.

In einem dritten Verfahrensschritt wird vom zweiten Busteilnehmer ausgelöst durch den Busfehlercode eine zweite Busnachricht mit einer Anfrage zur Übermittlung der Fehleridentifikation erzeugt.

In einem vierten Verfahrensschritt wird die zweite Busnachricht vom zweiten Busteilnehmer zum ersten Busteilnehmer übermittelt.

In einem fünften Verfahrensschritt wird vom ersten Busteilnehmer ausgelöst durch die Anfrage eine dritte Busnachricht erzeugt und die abgespeicherte Fehleridentifikation in den Busdatenbereich der dritten Busnachricht geschrieben.

In einem sechsten Verfahrensschritt wird die dritte Busnachricht vom ersten Busteilnehmer zum zweiten Busteilnehmer übermittelt.

In einem siebten Verfahrens schritt wird vom zweiten Busteilnehmer durch Auswertung des Busfehlercodes und der Fehleridentifikation der Fehler identifiziert.

Die Verfahrenschritte nutzen das bestehende Busprotokoll. Sämtliche Busnachrichten, insbesondere die erste, zweite und dritte Busnachricht, sind Busnachrichten gemäß dem Busprotokoll. Wenn, also nachdem, von dem ersten Busteilnehmer der Fehler erkannt worden ist, werden die beschriebenen Verfahrensschritte ausgeführt. Die zeitliche Abfolge der Verfahrensschritte ergibt sich aus den jeweiligen Voraussetzungen des jeweiligen Verfahrensschritts.

Das erfindungsgemäße Verfahren hat gegenüber aus dem Stand der Technik bekannten Verfahren zur Fehlerbehandlung verschiedene Vorteile. Die Fehleridentifikation unterliegt keiner Begrenzung durch das Busprotokoll. Das Verfahren setzt auf dem bestehenden Busprotokoll auf und ist zu diesem kompatibel. Veränderungen und/oder Ergänzungen am Busprotokoll sind nicht erforderlich. Das Verfahren ermöglicht eine Fehleridentifikation von Fehlern, die im Busprotokoll nicht vorgesehen sind. Auch ermöglicht es eine genauere Fehleridentifikation als im Busprotokoll vorgesehen ist.

Auch wenn nur ein Busfehlercode und ein Fehler besprochen werden, so ist das Verfahren nicht auf diese beschränkt. Vielmehr ist das Verfahren auch für mehrere Busfehlercodes und Fehler geeignet. Zum Beispiel werden vom ersten Busteilnehmer nacheinander verschiedene Fehler erkannt. Jedem der Fehler wird dann der dazugehörige Busfehlercode zugeordnet und die entsprechende Fehleridentifikationen abgespeichert. Jeder der Fehler löst das beschriebene Verfahren aus.

In einer Ausgestaltung des erfindungsgemäßen Verfahrens ist vorgesehen, dass der Fehler durch eine Anfrage-Busnachricht verursacht wird, die vom zweiten Busteilnehmer zum ersten Busteilnehmer übermittelt wird. Zeitlich liegt die Anfrage-Busnachricht vor der ersten Busnachricht. Bei der Anfrage-Busnachricht handelt es sich um eine weitere Busnachricht gemäß dem Busprotokoll. Die Anfrage-Busnachricht verursacht den Fehler zum Beispiel dadurch, dass im Busdatenbereich Daten enthalten sind, welche falsche Nutzdaten für den ersten Busteilnehmer oder falsche Anweisungen enthalten.

In einer weiteren Ausgestaltung ist vorgesehen, dass die abgespeicherte Fehleridentifikation nach der Übermittlung der dritten Busnachricht gelöscht wird. In einer weiteren Ausgestaltung ist vorgesehen, dass die abgespeicherte Fehleridentifikation gelöscht wird, wenn die unmittelbar auf die erste Busnachricht folgende Busnachricht keine Anfrage auf Übermittlung der Fehleridentifikation enthält. Die beiden vorstehenden Ausgestaltungen gewährleisten, insbesondere in Kombination miteinander, dass immer die zu einem aufgetretenen Fehler gehörende Fehleridentifikation abgespeichert ist.

In einer weiteren Ausgestaltung ist vorgesehen, dass im Rahmen der Auswertung die Fehleridentifikation signalisiert wird. Das Signalisieren der Fehleridentifikation erfolgt zum Beispiel durch Anzeigen der Fehleridentifikation durch eine Anzeigeeinrichtung wie zum Beispiel ein Leuchtmittel oder ein Display.

In einer weiteren Ausgestaltung ist vorgesehen, dass durch den zweiten Busteilnehmer Maßnahmen zur Kompensation des Fehlers ausgeführt werden. Die Maßnahmen zur Kompensation erfolgen im Rahmen der Auswertung und schließen sich an die Identifikation des Fehlers an. Vorzugsweise sind die Maßnahmen auf den identifizierten Fehler abgestimmt. Ist der Fehleridentifikation zum Beispiel zu entnehmen, dass der Fehler bei der Übermittlung einer Busnachricht aufgetreten ist, so wird gemäß einer ersten Maßnahme diese Busnachricht erneut übermittelt.

In einer weiteren Ausgestaltung ist vorgesehen, dass der erste Busteilnehmer und/oder der zweite Busteilnehmer dann in einen sicheren Zustand gebracht werden bzw. wird, wenn bei der Auswertung ein die ordnungsgemäße Funktion des ersten und/oder des zweiten Busteilnehmers beeinträchtigender Fehler identifiziert wird. Da die Auswertung der Fehleridentifikation durch den zweiten Busteilnehmer erfolgt, erfolgt auch die Identifikation eines die ordnungsgemäße Funktion des ersten und/oder des zweiten Busteilnehmers beeinträchtigenden Fehlers durch den zweiten Busteilnehmer. Die ordnungsgemäße Funktion der Busteilnehmer ist zum Beispiel dann nicht mehr gegeben, wenn von einem der Busteilnehmer das Busprotokoll nicht mehr umgesetzt wird. Ein sicherer Zustand eines Busteilnehmers ist insbesondere ein energieloser, also abgeschalteter Zustand.

In einer weiteren Ausgestaltung ist vorgesehen, dass beim Erzeugen der dritten Busnachricht im Busdatenbereich ein erstes Busdatenfeld und ein zweites Busdatenfeld angeordnet werden, dass ein erster Teil der Fehleridentifikation im ersten Busdatenfeld und ein zweiter Teil der Fehleridentifikation im zweiten Busdatenfeld abgelegt werden und dass der zweite Teil der Fehleridentifikation den ersten Teil der Fehleridentifikation näher bestimmt. Die Aufteilung der Fehleridentifikation in den ersten und in den zweiten Teil ist vorteilhaft, da auf diese Weise eine effiziente Auswertung der Fehleridentifikation gegeben ist. So wird für eine erste grobe Fehleridentifikation lediglich das erste Busdatenfeld ausgewertet und wird, wenn eine genauere Fehleridentifikation notwendig ist, dann auch das zweite Busdatenfeld ausgewertet.

Oftmals betrifft der Fehler einen Zugriff auf Daten in einem Speicher. Bei dem Speicher handelt es sich zum Beispiel um einen Speicher im ersten Busteilnehmer. In einer weiteren Ausgestaltung ist deshalb vorgesehen, dass beim Erzeugen der dritten Busnachricht im Busdatenbereich der dritten Busnachricht ein Adressen-Busdatenfeld angeordnet wird und im Adressen-Busdatenfeld eine Adresse der Daten im Speicher abgelegt wird. Wenn der Fehler nun einen Zugriff auf Daten in einem Speicher betrifft und dem Fehler eine dementsprechende Fehleridentifikation zugeordnet ist, wird bei der Auswertung der Fehleridentifikation im Busdatenbereich auch das Adressen-Busdatenfeld ausgewertet. Auf diese Weise ist eine einfache Identifikation von Fehlern möglich, wenn diese den Speicher betreffen.

In einer weiteren Ausgestaltung ist vorgesehen, dass als das Busprotokoll ein Modbus-Protokoll umgesetzt wird. Das Modbus-Protokoll ist prädestiniert als das Busprotokoll, da das Modbus-Protokoll nur eine geringe Anzahl an Busfehlercodes definiert. Insbesondere bietet sich beim Modbus-Protokoll der Busfehlercode 0x04 "Server Device Failure" als der Busfehlercode an, welcher den zweiten Busteilnehmer veranlasst, die zweite Busnachricht zu erzeugen. Denn dieser Busfehlercode ist gemäß Modbus-Protokoll bei einer Vielzahl von Fehlern vorgesehen, wodurch die Identifikation dieser Fehler beeinträchtigt ist.

Die Aufgabe ist auch bei einem Buskommunikationssystem der beschriebenen Art durch die Lehre gemäß Patentanspruch 11 gelöst.

Gemäß dieser Lehre ist der erste Busteilnehmer zum einen ausgebildet ausgelöst durch das Erkennen des Fehlers, eine den Busfehlercode ergänzende Fehleridentifikation des Fehlers im ersten Busteilnehmer abzuspeichern, und zum anderen ausgebildet ausgelöst durch Empfang einer Anfrage in einer zweiten Busnachricht, eine dritte Busnachricht zu erzeugen und die Fehleridentifikation in den Busdatenbereich der dritten Busnachricht zu schreiben. Weiter ist der zweite Busteilnehmer zum einen ausgebildet ausgelöst durch Empfang des Busfehlercodes in der ersten Busnachricht, die zweite Busnachricht mit der Anfrage zur Übermittlung der Fehleridentifikation zu erzeugen, und zum anderen ausgebildet, durch Auswertung des Busfehlercodes und der Fehleridentifikation den Fehler zur Fehlerbehandlung zu identifizieren.

In einer Ausgestaltung des erfindungsgemäßen Buskommunikationssystems ist vorgesehen, dass das Buskommunikationssystem zur Ausführung eines der zuvor beschriebenen Verfahren ausgebildet ist.

Die Ausführungen zum Verfahren gelten entsprechend für das Buskommunikationssystem und umgekehrt.

Im Einzelnen ist eine Vielzahl von Möglichkeiten gegeben, das Verfahren zur Fehlerbehandlung und das Buskommunikationssystem auszugestalten und weiterzubilden. Dazu wird verwiesen sowohl auf die den Patentansprüchen 1 und 11 nachgeordneten Patentansprüche als auch auf die nachfolgende Beschreibung eines bevorzugten Ausführungsbeispiels in Verbindung mit der Zeichnung. In der Zeichnung zeigt abstrahiert
- Fig. 1: ein Ausführungsbeispiel eines Buskommunikationssystems,
- Fig. 2: Busnachrichten gemäß einem Busprotokoll und
- Fig. 3: ein Ablaufdiagramm eines Verfahrens.

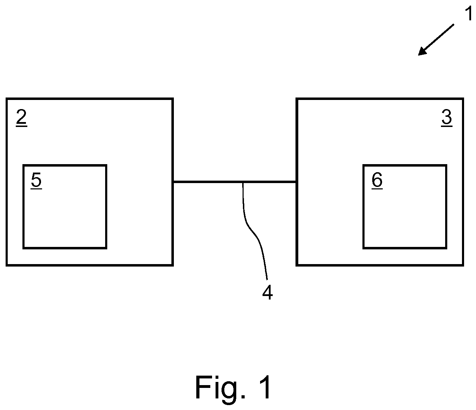

Fig. 1 zeigt ein Ausführungsbeispiel eines Buskommunikationssystem 1, welches in der Prozessautomation verwendet wird. Es weist einen ersten Busteilnehmer 2, einen zweiten Busteilnehmer 3 und einen leitungsgebundenen Bus 4 auf. Der erste Busteilnehmer 2 ist ein magnetisch-induktives Durchflussmessgerät, als Feldgerät ausgebildet und weist einen Speicher 5 auf. Der zweite Busteilnehmer 3 ist ein Leitsystem und weist ein Display 6 auf. Der zweite Busteilnehmer 3 steuert den ersten Busteilnehmer 2.

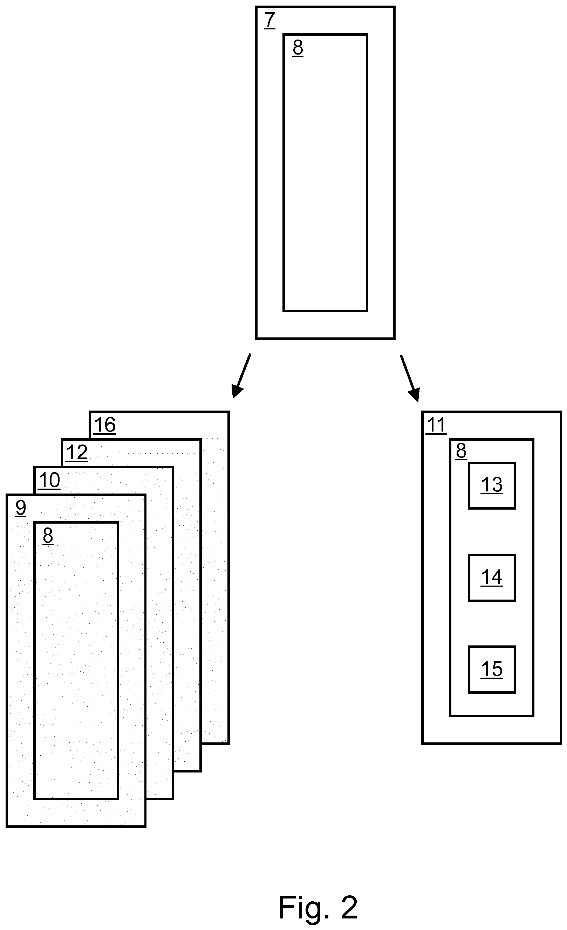

Der erste Busteilnehmer 2 und der zweite Busteilnehmer 3 sind zur Buskommunikation untereinander über den Bus 4 gemäß einem Modbus-Protokoll ausgebildet. Gemäß dem Modbus-Protokoll ist der erste Busteilnehmer 2 ein Server und der zweite Busteilnehmer 3 ein Client. Das Modbus-Protokoll definiert zum einen Busfehlercodes und zum anderen Busnachrichten. Ein Busfehlercode gemäß dem Modbus-Protokoll ist der Busfehlercode 0x04 "Server Device Failure". Dieser Busfehlercode ist verschiedenen Fehlern zugeordnet, weshalb die Identifikation eines Fehlers nur aufgrund des Busfehlercodes zur Fehlerbehandlung nicht eindeutig ist. Dadurch ist die Fehlerbehandlung beeinträchtigt. Jede Busnachricht 7 weist einen Busdatenbereich 8 auf, siehe Fig. 2. In dem Busdatenbereich 8 werden beliebige Daten zwischen dem ersten Busteilnehmer 2 und dem zweiten Busteilnehmer 3 übermittelt. Die Daten im Busdatenbereich 8 sind zum Beispiel Nutzdaten oder Anweisungen.

Der erste Busteilnehmer 2 ist ausgebildet, Fehler zu erkennen, und ist ausgebildet ausgelöst durch das Erkennen eines Fehlers, eine erste Busnachricht 9, siehe Fig. 2, zu erzeugen und den zum erkannten Fehler gehörenden Busfehlercode in den Busdatenbereich 8 der ersten Busnachricht 9 zu schreiben. Zum Beispiel handelt es sich um einen Fehler, welchem gemäß dem Modbus-Protokoll der Busfehlercode 0x04 zugeordnet ist. Der zweite Busteilnehmer 3 ist ausgebildet, durch Auswertung des Busfehlercodes den Fehler, soweit gemäß Modbus-Protokoll möglich, zu identifizieren.

Weiter ist der erste Busteilnehmer 2 ausgebildet ausgelöst durch das Erkennen des Fehlers, eine den Busfehlercode ergänzende Fehleridentifikation des Fehlers im ersten Busteilnehmer 2 abzuspeichern, und ist ausgebildet ausgelöst durch Empfang einer Anfrage in einer zweiten Busnachricht 10, siehe Fig. 2, eine dritte Busnachricht 11, siehe Fig. 2, zu erzeugen und die Fehleridentifikation in den Busdatenbereich 8 der dritten Busnachricht 11 zu schreiben. Die erste, zweite und dritte Busnachricht sind Busnachrichten gemäß dem Modbus-Protokoll.

Weiter ist der zweite Busteilnehmer 3 ausgebildet ausgelöst durch Empfang des Busfehlercodes in der ersten Busnachricht 9, die zweite Busnachricht 10 mit der Anfrage zur Übermittlung der Fehleridentifikation zu erzeugen, und ist ausgebildet, durch Auswertung des Busfehlercodes und der Fehleridentifikation den Fehler zur Fehlerbehandlung zu identifizieren. Durch das weitere Identifizieren mittels der Fehleridentifikation wird der Fehler genauer identifiziert als mit dem Busfehlercode allein.

Im Betrieb des Buskommunikationssystems 1 wird im vorliegenden Ausführungsbeispiel zunächst eine Anfrage-Busnachricht 12, siehe Fig. 2, vom zweiten Busteilnehmer 3 zum ersten Busteilnehmer 2 übermittelt. Die Anfrage-Busnachricht 12 ist eine weitere Busnachricht gemäß dem Modbus-Protokoll. Sie enthält im Busdatenbereich 8 die Anweisung vom zweiten Busteilnehmer 3 an den ersten Busteilnehmer 2, den Messwert an einer Adresse im Speicher 5 des ersten Busteilnehmers 2 an den zweiten Busteilnehmer 3 zu übermitteln. Vorliegend ist jedoch an dieser Adresse kein Messwert abgespeichert, weshalb die Anfrage-Busnachricht 12 einen Fehler im ersten Busteilnehmer 2 verursacht. Diesem Fehler ist gemäß dem Modbus-Protokoll der Busfehlercode 0x04 zugeordnet.

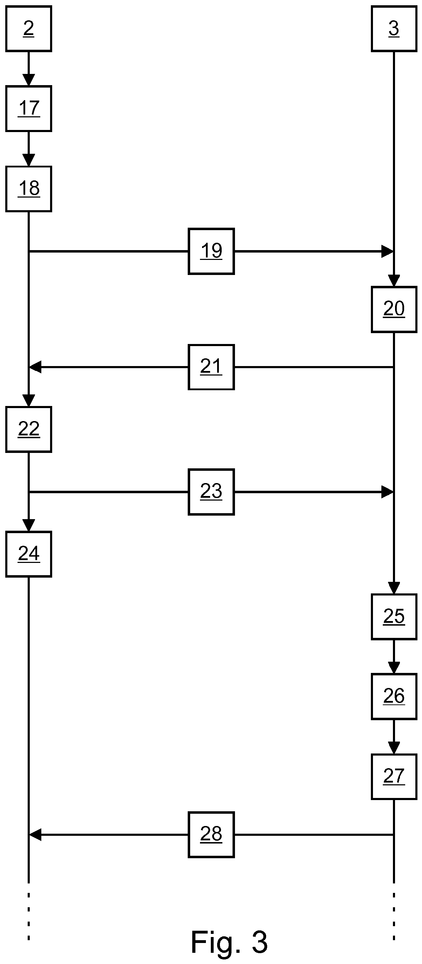

Das Buskommunikationssystem 1 führt im Betrieb ein Verfahren zur Fehlerbehandlung mit den folgenden Verfahrensschritten aus, siehe Fig. 3:
In einem ersten Verfahrensschritt 17 wird vom ersten Busteilnehmer 2 der Fehler erkannt. Das Erkennen umfasst das Zuordnen des Busfehlercodes 0x04 zu diesem Fehler.

In einem zweiten Verfahrensschritt 18 wird wieder vom ersten Busteilnehmer 2 eine den Busfehlercode ergänzende Fehleridentifikation des Fehlers im ersten Busteilnehmer 2 abgespeichert, eine erste Busnachricht 9, siehe Fig. 2, erzeugt und der Busfehlercode in den Busdatenbereich 8 der ersten Busnachricht 9 geschrieben.

In einem dritten Verfahrensschritt 19 wird die erste Busnachricht 9 vom ersten Busteilnehmer 2 zum zweiten Busteilnehmer 3 übermittelt.

In einem vierten Verfahrensschritt 20 wird vom zweiten Busteilnehmer 3 ausgelöst durch den Busfehlercode eine zweite Busnachricht 10, siehe Fig. 2, mit einer Anfrage zur Übermittlung der Fehleridentifikation erzeugt.

In einem fünften Verfahrensschritt 21 wird die zweite Busnachricht 10 vom zweiten Busteilnehmer 3 zum ersten Busteilnehmer 2 übermittelt.

In einem sechsten Verfahrensschritt 22 wird vom ersten Busteilnehmer 2 ausgelöst durch die Anfrage eine dritte Busnachricht 11, siehe Fig. 2, erzeugt und die abgespeicherte Fehleridentifikation in den Busdatenbereich 8 der dritten Busnachricht 10 geschrieben.

Die Fehleridentifikation weist vorliegend einen ersten und einen zweiten Teil auf, wobei der zweite Teil den ersten Teil näher bestimmt. Entsprechend werden beim Erzeugen der dritten Busnachricht 11, siehe Fig. 2, im Busdatenbereich 8 ein erstes Busdatenfeld 13 und ein zweites Busdatenfeld 14 angeordnet. Der erste Teil der Fehleridentifikation wird im ersten Busdatenfeld 13 und der zweite Teil der Fehleridentifikation im zweiten Busdatenfeld 14 abgelegt. Da der Fehler einen Zugriff auf Daten in einem Speicher 5 betrifft, wird beim Erzeugen der dritten Busnachricht 11 im Busdatenbereich 8 auch ein Adressen-Busdatenfeld 15 angeordnet und wird im Adressen-Busdatenfeld 13 eine Adresse der Daten im Speicher 5 abgelegt.

In einem siebten Verfahrensschritt 23 wird die dritte Busnachricht 11 vom ersten Busteilnehmer 2 zum zweiten Busteilnehmer 3 übermittelt.

In einem achten Verfahrensschritt 24 wird vom ersten Busteilnehmer 2 die zuvor abgespeicherte Fehleridentifikation nach der Übermittlung der dritten Busnachricht 11 gelöscht.

In einem neunten Verfahrensschritt 25 wird vom zweiten Busteilnehmer 3 durch Auswertung des Busfehlercodes und der Fehleridentifikation der Fehler identifiziert. Die Aufteilung der Fehleridentifikation in den ersten und in den zweiten Teil ist vorteilhaft, da auf diese Weise eine effiziente Auswertung der Fehleridentifikation gegeben ist. So ist bereits nach der Auswertung des ersten Busdatenfelds 13 eine grobe Fehleridentifikation möglich. Eine genauere Fehleridentifikation ergibt sich dann nach der Auswertung des zweiten Busdatenfelds 14. Bei der Auswertung der Fehleridentifikation im Busdatenbereich 8 wird auch das Adressen-Busdatenfeld 15 ausgewertet. Auf diese Weise ist eine einfache Identifikation des Fehlers möglich, da die Adresse bekannt ist. Diese Fehleridentifikation im Busdatenbereich 8 unterliegt nicht den Begrenzungen des Modbus-Protokolls. Deshalb ist eine genauere Fehleridentifikation von Fehlern als im Modbus-Protokoll vorgesehen möglich. Das Verfahren setzt auf dem bestehenden Modbus-Protokoll auf und ist zu diesem kompatibel. Veränderungen oder Ergänzungen am Modbus-Protokoll sind nicht erforderlich. Das Übermitteln der Busnachrichten erfolgt gemäß dem Modbus-Protokoll.

In einem zehnten Verfahrensschritt 26 werden durch den zweiten Busteilnehmer 3 Maßnahmen zur Kompensation des Fehlers ausgeführt. Die Maßnahmen zur Kompensation erfolgen im Rahmen der Auswertung. Vorliegend wird eine weitere Anfrage-Busnachricht 16, siehe Fig. 2, vom zweiten Busteilnehmer 3 an den ersten Busteilnehmer 2 übermittelt, welche eine korrigierte Adresse aufweist.

In einem elften Verfahrensschritt 27 werden im Rahmen der Auswertung die Fehleridentifikation und die Adresse durch eine Anzeigeeinrichtung in Form des Displays 6 signalisiert. Das dient der Information eines Benutzer.

In einem zwölften Verfahrensschritt 28 wird der erste Busteilnehmer 2 durch den zweiten Busteilnehmer 3 in einen sicheren Zustand gebracht, wenn die Maßnahmen zur Kompensation des Fehlers erfolglos bleiben. Denn dann bewertet der zweite Busteilnehmer 3 den Fehler derart, dass eine ordnungsgemäße Funktion des ersten Busteilnehmers 2 durch den Fehler beeinträchtigt ist. Der sichere Zustand wird vorliegend durch Ausschalten des ersten Busteilnehmers 2 erreicht.

### Bezugszeichen

- 1.: Buskommunikationssystem
- 2.: Erster Busteilnehmer
- 3.: Zweiter Busteilnehmer
- 4.: Bus
- 5.: Speicher
- 6.: Display
- 7.: Busnachricht
- 8.: Busdatenbereich
- 9.: Erste Busnachricht
- 10.: Zweite Busnachricht
- 11.: Dritte Busnachricht
- 12.: Anfrage-Busnachricht
- 13.: Erstes Busdatenfeld
- 14.: Zweites Busdatenfeld
- 15.: Adressen-Busdatenfeld
- 16.: Weitere Anfrage-Busnachricht

## Patentansprüche

1. Verfahren zur Fehlerbehandlung bei Buskommunikation gemäß einem Busprotokoll zwischen einem ersten Busteilnehmer (2) und einem zweiten Busteilnehmer (3),
wobei das Busprotokoll mindestens einen Busfehlercode für einen Fehler und Busnachrichten (7, 9, 10, 11, 12, 16) mit einem Busdatenbereich (8) definiert und
wobei, wenn von dem ersten Busteilnehmer (2) der Fehler erkannt wird,
- vom ersten Busteilnehmer (2) eine den Busfehlercode ergänzende Fehleridentifikation des Fehlers im ersten Busteilnehmer (2) abgespeichert, eine erste Busnachricht (9) erzeugt und der Busfehlercode in den Busdatenbereich (8) der ersten Busnachricht (9) geschrieben wird,
- die erste Busnachricht (9) vom ersten Busteilnehmer (2) zum zweiten Busteilnehmer (3) übermittelt wird,
- vom zweiten Busteilnehmer (3) ausgelöst durch den Busfehlercode eine zweite Busnachricht (10) mit einer Anfrage zur Übermittlung der Fehleridentifikation erzeugt wird,
- die zweite Busnachricht (10) vom zweiten Busteilnehmer (3) zum ersten Busteilnehmer (2) übermittelt wird,
- vom ersten Busteilnehmer (2) ausgelöst durch die Anfrage eine dritte Busnachricht (11) erzeugt und die abgespeicherte Fehleridentifikation in den Busdatenbereich (8) der dritten Busnachricht (11) geschrieben wird,
- die dritte Busnachricht (11) vom ersten Busteilnehmer (2) zum zweiten Busteilnehmer (3) übermittelt wird und
- vom zweiten Busteilnehmer (3) durch Auswertung des Busfehlercodes und der Fehleridentifikation der Fehler identifiziert wird.

2. Verfahren nach Anspruch 1, **dadurch gekennzeichnet, dass** der Fehler durch eine Anfrage-Busnachricht (12) verursacht wird, die vom zweiten Busteilnehmer (3) zum ersten Busteilnehmer (2) übermittelt wird.

3. Verfahren nach Anspruch 1 oder 2, **dadurch gekennzeichnet, dass** die abgespeicherte Fehleridentifikation nach der Übermittlung der dritten Busnachricht (11) gelöscht wird.

4. Verfahren nach einem der Ansprüche 1 bis 3, **dadurch gekennzeichnet, dass** die abgespeicherte Fehleridentifikation gelöscht wird, wenn die unmittelbar auf die erste Busnachricht (9) folgende Busnachricht keine Anfrage auf Übermittlung der Fehleridentifikation enthält.

5. Verfahren nach einem der Ansprüche 1 bis 4, **dadurch gekennzeichnet, dass** im Rahmen der Auswertung die Fehleridentifikation signalisiert wird.

6. Verfahren nach einem der Ansprüche 1 bis 5, **dadurch gekennzeichnet, dass** durch den zweiten Busteilnehmer (3) Maßnahmen zur Kompensation des Fehlers ausgeführt werden.

7. Verfahren nach einem der Ansprüche 1 bis 6, **dadurch gekennzeichnet, dass** der erste Busteilnehmer (2) und/oder der zweite Busteilnehmer (3) dann in einen sicheren Zustand gebracht werden bzw. wird, wenn bei der Auswertung ein die ordnungsgemäße Funktion des ersten Busteilnehmers (2) und/oder des zweiten Busteilnehmers (3) beeinträchtigender Fehler identifiziert wird.

8. Verfahren nach einem der Ansprüche 1 bis 7, **dadurch gekennzeichnet, dass** beim Erzeugen der dritten Busnachricht (11) im Busdatenbereich (9) ein erstes Busdatenfeld (13) und ein zweites Busdatenfeld (14) angeordnet werden,
dass ein erster Teil der Fehleridentifikation im ersten Busdatenfeld (13) und ein zweiter Teil der Fehleridentifikation im zweiten Busdatenfeld (14) abgelegt werden und
dass der zweite Teil der Fehleridentifikation den ersten Teil der Fehleridentifikation weiter bestimmt.

9. Verfahren nach einem der Ansprüche 1 bis 8, wobei der Fehler einen Zugriff auf Daten in einem Speicher (5) betrifft, **dadurch gekennzeichnet, dass** beim Erzeugen der dritten Busnachricht (11) im Busdatenbereich (8) ein Adressen-Busdatenfeld (15) angeordnet wird und im Adressen-Busdatenfeld (15) eine Adresse der Daten im Speicher (5) abgelegt wird.

10. Verfahren nach einem der Ansprüche 1 bis 9, **dadurch gekennzeichnet, dass** als das Busprotokoll ein Modbus-Protokoll umgesetzt wird.

11. Buskommunikationssystem (1) mit einem ersten Busteilnehmer (2), einem zweiten Busteilnehmer (3) und einem Bus (4),
wobei der erste Busteilnehmer (2) und der zweite Busteilnehmer (3) zur Buskommunikation untereinander über den Bus (4) gemäß einem Busprotokoll ausgebildet sind,
wobei das Busprotokoll mindestens einen Busfehlercode für einen Fehler und Busnachrichten (7, 9, 10, 11, 12, 16) mit einem Busdatenbereich (8) definiert,
wobei der erste Busteilnehmer (2) ausgebildet ist, den Fehler zu erkennen, und ausgebildet ist ausgelöst durch das Erkennen des Fehlers, eine erste Busnachricht (9) zu erzeugen und den Busfehlercode in den Busdatenbereich (8) der ersten Busnachricht (9) zu schreiben,
wobei der zweite Busteilnehmer (3) ausgebildet ist, durch Auswertung des Busfehlercodes den Fehler zu identifizieren,
**dadurch gekennzeichnet,**
**dass** der erste Busteilnehmer (2) ausgebildet ist ausgelöst durch das Erkennen des Fehlers, eine den Busfehlercode ergänzende Fehleridentifikation des Fehlers im ersten Busteilnehmer (2) abzuspeichern, und ausgebildet ist ausgelöst durch Empfang einer Anfrage in einer zweiten Busnachricht (10), eine dritte Busnachricht (11) zu erzeugen und die Fehleridentifikation in den Busdatenbereich (8) der dritten Busnachricht (11) zu schreiben,
**dass** der zweite Busteilnehmer (3) ausgebildet ist ausgelöst durch Empfang des Busfehlercodes in der ersten Busnachricht (9), die zweite Busnachricht (10) mit der Anfrage zur Übermittlung der Fehleridentifikation zu erzeugen, und ausgebildet ist, durch Auswertung des Busfehlercodes und der Fehleridentifikation den Fehler zur Fehlerbehandlung zu identifizieren.

12. Buskommunikationssystem (1) nach Anspruch 11, **dadurch gekennzeichnet, dass** das Buskommunikationssystem (1) zur Ausführung eines Verfahrens nach einem der Ansprüche 2 bis 10 ausgebildet ist.

## Claims

1. Method for error management in bus communication according to a bus protocol between a first bus subscriber (2) and a second bus subscriber (3),
wherein the bus protocol defines at least one bus error code for an error and bus messages (7, 9, 10, 11, 12, 16) with a bus data area (8), and
wherein, when the error is detected by the first bus subscriber (2),
- an error identification of the error in the first bus subscriber (2) amending the bus error code is stored, a first bus message (9) is generated and the bus error code is written into the bus data area (8) of the first bus message (9) by the first bus subscriber (2),
- the first bus message (9) is transmitted from the first bus subscriber (2) to the second bus subscriber (3),
- a second bus message (10) with a request for transmission of the error identification is generated by the second bus subscriber (3) triggered by the bus error code,
- the second bus message (10) is transmitted from the second bus subscriber (3) to the first bus subscriber (2),
- a third bus message (11) is generated by the first bus subscriber (2) triggered by the request and the stored error identification is written into the bus data area (8) of the third bus message (11),
- the third bus message (11) is transmitted from the first bus subscriber (2) to the second bus subscriber (3) and
- the errors are identified by the second bus subscriber (3) by evaluating the bus error code and the error identification.

2. Method according to claim 1, **characterized in that** the error is caused by a request bus message (12) transmitted from the second bus subscriber (3) to the first bus subscriber (2).

3. Method according to claim 1 or 2, **characterized in that** the stored error identification is deleted after the transmission of the third bus message (11).

4. Method according to any one of claims 1 to 3, **characterized in that** the stored error identification is deleted if the bus message immediately following the first bus message (9) does not contain a request for transmission of the error identification.

5. Method according to any one of claims 1 to 4, **characterized in that** the error identification is signaled within the scope of the evaluation.

6. Method according to any one of claims 1 to 5, **characterized in that** measures for compensating the error are carried out by the second bus subscriber (3).

7. Method according to any one of claims 1 to 6, **characterized in that** the first bus subscriber (2) and/or the second bus subscriber (3) is/are brought into a secure state if, during evaluation, an error that impairs the proper functioning of the first bus subscriber (2) and/or the second bus subscriber (3) is identified.

8. Method according to any one of claims 1 to 7, **characterized in**
**that**, when the third bus message (11) is generated, a first bus data field (13) and a second bus data field (14) are arranged in the bus data area (9),
**that** a first part of the error identification is stored in the first bus data field (13) and a second part of the error identification is stored in the second bus data field (14) and
**that** the second part of the error identification further specifies the first part of the error identification.

9. Method according to any one of claims 1 to 8, wherein the error relates to access to data in a memory (5), **characterized in that**, when the third bus message (11) is generated, an address bus data field (15) is arranged in the bus data area (8) and an address of the data in the memory (5) is stored in the address bus data field (15).

10. Method according to any one of claims 1 to 9, **characterized in that** a Modbus protocol is implemented as the bus protocol.

11. Bus communication system (1) having a first bus subscriber (2), a second bus subscriber (3) and a bus (4),
wherein the first bus subscriber (2) and the second bus subscriber (3) are designed for bus communication with one another via the bus (4) according to a bus protocol,
wherein the bus protocol defines at least one bus error code for an error and bus messages (7, 9, 10, 11, 12, 16) with a bus data area (8),
wherein the first bus subscriber (2) is designed to identify the error and is designed to generate a first bus message (9) and to write the bus error code into the bus data area (8) of the first bus message (9) triggered by the detection of the error,
wherein the second bus subscriber (3) is designed to identify the error by evaluating the bus error code,
**characterized in**
**that**, triggered by the identification of the error, the first bus subscriber (2) is designed to store an error identification of the error in the first bus subscriber (2) amending the bus error code, and, triggered by receiving a request in a second bus message (10), is designed to generate a third bus message (11) and to write the error identification in the bus data area (8) of the third bus message (11),
**that**, triggered by receiving the bus error code in the first bus message (9), the second bus subscriber (3) is designed to generate the second bus message (10) with the request for transmission of the error identification, and is designed to identify the error for error management by evaluating the bus error code and the error identification.

12. Bus communication system (1) according to claim 11, **characterized in that** the bus communication system (1) is designed to carry out a method according to any one of claims 2 to 10.

## Revendications

1. Procédé de traitement des erreurs lors de la communication par bus conformément à un protocole de bus entre un premier utilisateur de bus (2) et un deuxième utilisateur de bus (3),
le protocole de bus définissant au moins un code d'erreur de bus pour une erreur et des messages de bus (7, 9, 10, 11, 12, 16) comportant une zone de données de bus (8) et
procédé selon lequel, lorsque l'erreur est reconnue par le premier utilisateur de bus (2),
- une identification de l'erreur qui complète le code d'erreur de bus est mémorisée dans le premier utilisateur de bus (2) par le premier utilisateur de bus (2), un premier message de bus (9) est généré et le code d'erreur de bus est écrit dans la zone de données de bus (8) du premier message de bus (9),
- le premier message de bus (9) est communiqué par le premier utilisateur de bus (2) au deuxième utilisateur de bus (3),
- un deuxième message de bus (10), déclenché par le code d'erreur de bus, est généré par le deuxième utilisateur de bus (3) avec une demande de communication de l'identification d'erreur,
- le deuxième message de bus (10) est communiqué du deuxième utilisateur de bus (3) au premier utilisateur de bus (2),
- un troisième message de bus (11), déclenché par la demande, est généré par le premier utilisateur de bus (2) et l'identification d'erreur mémorisée est écrite dans la zone de données de bus (8) du troisième message de bus (11),
- le troisième message de bus (11) est communiqué du premier utilisateur de bus (2) au deuxième utilisateur de bus (3) et
- l'erreur est identifiée par le deuxième utilisateur de bus (3) par interprétation du code d'erreur de bus et de l'identification d'erreur.

2. Procédé selon la revendication 1, **caractérisé en ce que** l'erreur est provoquée par un message de bus de demande (12) qui est communiqué au premier utilisateur de bus (2) par le deuxième utilisateur de bus (3).

3. Procédé selon la revendication 1 ou 2, **caractérisé en ce que** l'identification d'erreur mémorisée est effacée après la communication du troisième message de bus (11).

4. Procédé selon l'une des revendications 1 à 3, **caractérisé en ce que** l'identification d'erreur mémorisée est effacée lorsque le message de bus qui suit immédiatement le premier message de bus (9) ne contient aucune demande de communication de l'identification d'erreur.

5. Procédé selon l'une des revendications 1 à 4, **caractérisé en ce que** l'identification d'erreur est signalée dans le cadre de l'interprétation.

6. Procédé selon l'une des revendications 1 à 5, **caractérisé en ce que** des mesures de compensation de l'erreur sont prises par le deuxième utilisateur de bus (3) .

7. Procédé selon l'une des revendications 1 à 6, **caractérisé en ce que** le premier utilisateur de bus (2) et/ou le deuxième utilisateur de bus (3) sont ou est amené (s) dans un état sécurisé lorsque, lors de l'interprétation, une erreur est identifiée qui affecte le bon fonctionnement du premier utilisateur de bus (2) et/ou du deuxième utilisateur de bus (3).

8. Procédé selon l'une des revendications 1 à 7, **caractérisé en ce**
**que** lors de la génération du troisième message de bus (11), un premier champ de données de bus (13) et un deuxième champ de données de bus (14) sont disposés dans la zone de données de bus (9),
**qu'**une première partie de l'identification d'erreur est déposée dans le premier champ de données de bus (13) et une deuxième partie de l'identification d'erreur est déposée dans le deuxième champ de données de bus (14) et
**que** la deuxième partie de l'identification d'erreur réalise une détermination supplémentaire de la première partie de l'identification d'erreur.

9. Procédé selon l'une des revendications 1 à 8, l'erreur concernant un accès aux données dans une mémoire (5), **caractérisé en ce que** lors de la génération du troisième message de bus (11) un champ de données de bus d'adresse (15) est disposé dans la zone de données de bus (8) et une adresse des données dans la mémoire (5) est déposée dans le champ de données de bus d'adresse (15).

10. Procédé selon l'une des revendications 1 à 9, **caractérisé en ce que** le protocole de bus mis en œuvre est un protocole Modbus.

11. Système de communication par bus (1) comprenant un premier utilisateur de bus (2), un deuxième utilisateur de bus (3) et un bus (4),
le premier utilisateur de bus (2) et le deuxième utilisateur de bus (3) étant configurés pour une communication par bus entre eux par le biais du bus (4) conformément à un protocole de bus,
le protocole de bus définissant au moins un code d'erreur de bus pour une erreur et des messages de bus (7, 9, 10, 11, 12, 16) comportant une zone de données de bus (8),
le premier utilisateur de bus (2) étant configuré pour reconnaître l'erreur et étant configuré pour, déclenché par la reconnaissance de l'erreur, générer un premier message de bus (9) et écrire le code d'erreur de bus dans la zone de données de bus (8) du premier message de bus (9),
le deuxième utilisateur de bus (3) étant configuré pour identifier l'erreur par interprétation du code d'erreur de bus,
**caractérisé en ce**
**que** le premier utilisateur de bus (2) est configuré pour, déclenché par la reconnaissance de l'erreur, mémoriser une identification d'erreur qui complète le code d'erreur de bus dans le premier utilisateur de bus (2), et configuré pour, déclenché par la réception d'une demande dans un deuxième message de bus (10), générer un troisième message de bus (11) et écrire l'identification d'erreur dans la zone de données de bus (8) du troisième message de bus (11),
**que** le deuxième utilisateur de bus (3) est configuré pour, déclenché par la réception du code d'erreur de bus dans le premier message de bus (9), générer le deuxième message de bus (10) avec la demande de communication de l'identification d'erreur, et configuré pour, par interprétation du code d'erreur de bus et de l'identification d'erreur, identifier l'erreur en vue du traitement d'erreur.

12. Système de communication par bus (1) selon la revendication 11, **caractérisé en ce que** le système de communication par bus (1) est configuré pour mettre en œuvre un procédé selon l'une des revendications 2 à 10.
